# EUROPÄISCHE PATENTSCHRIFT

(11) **EP 3 116 681 B1**
(45) Veröffentlichungstag und Bekanntmachung des Hinweises auf die Patenterteilung: **23.10.2019**
(21) Anmeldenummer: 15711693.0
(22) Anmeldetag: 13.03.2015
(51) Int. Cl.: G05B 19/4065

(54) **VORRICHTUNG UND VERFAHREN ZUM MESSEN UND ÜBERWACHEN VON WERKZEUGEN**
DEVICE AND METHOD FOR MEASURING AND MONITORING TOOLS
DISPOSITIF ET PROCÉDÉ DE MESURE ET DE SURVEILLANCE D'OUTILS

(30) Priorität: 14.03.2014 DE 102014204833
(43) Veröffentlichungstag der Anmeldung: 18.01.2017
(73) Patentinhaber: Sandvik Tooling Deutschland GmbH, 40549 Düsseldorf (DE)
(72) Erfinder: KLUFT, Werner, 52078 Aachen (DE)
(74) Vertreter: Sandvik
(86) Internationale Anmeldenummer: PCT/EP2015/055297
(87) Internationale Veröffentlichungsnummer: WO 2015/136075

(56) Entgegenhaltungen:
- EP-A1- 2 151 725
- EP-A2- 1 197 819
- EP-A2- 1 226 793
- EP-A2- 1 897 656
- WO-A1-2006/128892
- WO-A1-2012/063621
- DE-A1- 19 747 798
- JP-A- S5 621 748
- JP-A- 2005 034 934

## Beschreibung

Die Erfindung betrifft eine Vorrichtung und Verfahren zum Messen und Überwachen von Werkzeugen nach dem Oberbegriff der Ansprüche 1 und 8 (siehe z.B. EP 2 151 725 A1).

Es ist aus der WO2006/128892 A1 ein Verfahren und eine Vorrichtung zur Brucherkennung von Werkzeugen einer Werkzeugmaschine mit einem Mess- und Überwachungssystem für die Brucherkennung bekannt, wobei die Werkzeugmaschine eine Spindelwelle für das Werkzeug aufweist, die Werkstücke mit guter elektrischer Leitfähigkeit spanabhebend bearbeitet. Das Mess- und Überwachungssystem misst mindestens eine von dem Kontaktzustand zwischen Werkzeug und Werkstück abhängige elektrische Messgröße, wobei Hybridlager die Spindelwelle tragen und gegenüber der Werkzeugmaschine elektrisch isolieren, wobei ein Kontaktelement zum Messen der zwischen Werkzeug und Werkstück erfassbaren Messgröße die sich drehende Spindelwelle kontaktiert.

Es ist jedoch sehr aufwendig, Kontaktelemente zum Messen der zwischen dem Werkzeug und dem Werkstück erfassbaren Messgröße vorzusehen.

EP 2 151 725 A1 beschreibt eine Vorrichtung zum Messen und Überwachen von Werkzeugen einer Werkzeugmaschine, wobei eine Detektionsschaltung vorgesehen ist zum Erfassen eines Stroms, welcher fließt, sobald das Werkzeug der Werkzeugmaschine mit dem Werkstück in Kontakt gelangt.

Aufgabe der vorliegenden Erfindung ist es daher, eine Vorrichtung und ein Verfahren zum Messen und Überwachen von Werkzeugen zu vereinfachen.

Zur Lösung dieser Aufgabe dienen die Merkmale der Ansprüche 1 und 8.

Gemäß der vorliegenden Erfindung ist eine Vorrichtung zum Messen und Überwachen von Werkzeugen einer Werkzeugmaschine vorgesehen, wobei ein Drehübertrager zum Messen der zwischen dem Werkzeug und dem Werkstück erfassbaren Messgröße die sich drehende Spindelwelle kontaktiert, wobei der Drehübertrager elektrisch isoliert mit dem Spindelgehäuse verbunden ist.

Zwischen dem Drehübertrager und dem Spindelgehäuse ist zur Isolierung vorzugsweise eine Keramikschicht vorgesehen. Eine mit der Spindelwelle elektrisch und mechanisch verbundene Welle im Drehübertrager wird vorzugsweise über mindestens ein elektrisch leitendes Stahllager getragen, während weitere Lager durchaus Hybridlager sein können.

Dies hat den Vorteil, dass die Spindelwelle über das Gehäuse des Drehübertragers auf eine einfache Art und Weise elektrisch kontaktiert werden kann und trotzdem die Spindelwelle gegenüber dem Spindelgehäuse elektrisch isoliert ist.

Das Mess- und Überwachungssystem weist zumindest einen ersten Ableitwiderstand auf, der in einem Zustand, in dem das Mess- und Überwachungssystem nicht misst, zuschaltbar ist, so dass elektrostatische Aufladungen von der Spindelwelle ableitbar sind.

Dadurch, dass die Spindelwelle und das Spindelgehäuse elektrisch voneinander isoliert sind, besteht der Nachteil, dass elektrostatische Aufladungen der Spindelwelle nicht an das Spindelgehäuse bzw. die dort aufgelegte elektrische Erde abgeleitet werden können. Dies kann jedoch dazu führen, dass es zu Funkenüberschlag in der Maschine bzw. zwischen dem Werkzeug und dem Werkstück bzw. auch in der Spindel, z. B. in oder an den Lagerungen kommen kann. Diese Funken können zu Explosionen, Bränden oder Verpuffungen in den Maschinen und/oder zu signifikanten Lagerungsschäden führen.

Dadurch, dass das Mess- und Überwachungssystem einen ersten Ableitwiderstand aufweist, der in einem Zustand, in dem das Mess- und Überwachungssystem nicht misst, zuschaltbar ist, kann die elektrostatische Aufladung von der Spindelwelle abgeleitet werden. Auf diese Weise kann ein Funkenüberschlag und auch eine Funkenbildung verhindert werden.

Ein Zustand, in dem das Mess- und Überwachungssystem nicht misst bedeutet, dass in diesem Zustand die elektrische Messgröße nicht erfasst wird oder nicht verwendet bzw. ausgewertet wird.

Die Höhe des ersten Ableitwiderstandes ist derart zu wählen, dass er unter Berücksichtigung des mit ihm in Reihe geschalteten elektrischen Widerstandes des elektrisch leitenden Lagers ausreichend klein ist, um die Menge einer maximal möglichen elektrischen Ladung auf der Spindelwelle schnell und ausreichend an die Erde abzuleiten. Er sollte den elektrischen Widerstand des Stahllagers (ca. 10 bis 80 Ohm bei Fettdauerschmierung) durch die Reihenschaltung mit ihm nicht nennenswert erhöhen, womit der erste Ableitwiderstand deutlich kleiner als dieser und somit beispielsweise mit kleiner als 10 Ohm zu dimensionieren ist.

Der erste Ableitwiderstand wird immer dann zugeschaltet, wenn kein Kontakt zwischen Werkzeug und Werkstück erwartet werden kann, um statische Aufladungen der Spindel schnell, sicher und ausreichend abzuführen. Damit wird die Gefahr eines elektrischen Schlages beim Arbeiten von Maschinenbedienern im Arbeitsraum der Maschine und dem Berühren der Spindelwelle oder dem Werkzeug ausgeschlossen.

Der erste Ableitwiderstand ist in einem Zustand, in dem das Mess- und Überwachungssystem misst, also dann, wenn ein Kontakt zwischen Werkzeug und Werkstück gegeben oder zu erwarten ist, nicht zugeschaltet, um den Messvorgang zu ermöglichen.

Das Mess- und Überwachungssystem kann zumindest einen zweiten Ableitwiderstand aufweisen, der in einem Betriebszustand, in dem das Mess- und Überwachungssystem misst, zuschaltbar ist. Dies erfolgt in Zeiten, in denen ein Kontakt zwischen dem Werkzeug und dem Werkstück zu erwarten ist, das Werkzeug also auf das Werkstück zufährt bis der Werkstück-/Werkzeugkontakt entsteht. Die während dieses Zufahrprozesses maximal zufließbaren elektrischen Aufladungen der Spindelwelle müssen über den zweiten Ableitwiderstand unmittelbar und sicher abgeführt werden können, so dass elektrostatische Aufladungen der Spindelwelle während dieser Zeit nicht entstehen können.

Da die maximal zufließbaren Ladungen in dieser kurzen Zeit des Messvorganges deutlich kleiner sind als die über eine längere Zeit maximal auf der Spindelwelle ladbaren elektrostatischen Aufladungen, die mit dem sehr kleinen ersten Ableitwiderstand sicher abgeleitet werden, kann der zweite Ableitwiderstand deutlich größer als der erste Ableitwiderstand bemessen sein. Er muss auch deutlich größer als die Summe der Widerstände der Reihenschaltung des Messkreises im Falle eines Werkzeug-Werkstück-Kontaktes bestehend aus den Widerständen der Bauteile bzw. Komponenten Drehübertragergehäuse, Stahllager und Welle im Drehübertrager, Spindelwelle, Werkzeug, Werkstück und Schlitten mit Bett sein, da er parallel zu diesem liegt.

Die Höhe des zweiten Ableitwiderstands muss auch derart gewählt sein, dass er klein genug ist, dass die zuvor genannten elektrostatischen Aufladungen während der Messung sicher abgeführt werden. Anderseits muss er deutlich größer sein als der Gesamtwiderstand des zuvor genannten Messkreises im Falle eines Werkzeug-Werkstück-Kontaktes, so dass die zwischen dem Werkzeug und dem Werkstück zu messende Messgrößen noch erfassbar sind.

Der Messkreiswiderstand beträgt für den Fall des Kontaktes zwischen Werkzeug und Werkstück weniger als 150 Ohm. Somit sollte der zweite Ableitwiderstand größer als 1 Kiloohm, besser größer als 1,5 Kiloohm sein.

Die Spindelwelle und das Spindelgehäuse sind elektrisch voneinander isoliert und im Normalzustand beträgt der Isolationswiderstand der Luftstrecke dazwischen mehr als 1 Megaohm. Wenn durch Leckage oder andere Umstände Kühlschmiermittel in den Raum zwischen Spindelgehäuse und Spindelwelle gelangt, setzt dies den elektrischen Widerstand zwischen der Spindelwelle und dem Spindelgehäuse deutlich herab. Der Widerstand zwischen der Spindelwelle und dem Spindelgehäuse ist, falls Kühlschmiermittel in den Raum zwischen der Spindelwelle und Spindelgehäuse gelangt ist, kleiner als 50 Kiloohm.

Auch dieser dritte Zustand ist mit dem Mess- und Überwachungssystem erfassbar, indem in Zeiten in denen das Werkzeug nicht mit dem Werkstück in Kontakt steht, für sehr kurze Zeit die beiden Ableitwiderstände weggeschaltet werden, um die elektrische Messgröße unbeeinflusst von Ableitwiderständen zu erfassen. Eine solche Messung kann beispielsweise bei kurzen Bearbeitungsunterbrechungen einmal am Tag oder einmal in der Woche vorgenommen werden und dauert jeweils weniger als eine Sekunde. Hierdurch lassen sich anbahnende Spindelschäden aufgrund von Leckage rechtzeitig erkennen und damit tatsächliche Spindelschäden mindern oder verhindern.

Die von dem Kontaktzustand zwischen dem Werkzeug und dem Werkstück abhängige und erfassbare elektrische Messgröße kann der elektrische Widerstand, die elektrische Leitfähigkeit, die elektrische Induktivität, die elektrische Kapazität oder die elektrische Impedanz sein.

Mittels der zwischen dem Werkzeug und dem Werkstück abhängigen, erfassbaren elektrische Messgröße kann beispielsweise ein Werkzeugbruch, ein fehlendes Werkzeug oder der Werkstück-Werkzeug-Kontakt detektiert werden.

Es kann eine Werkzeugmaschine mit einem Mess- und Überwachungssystem mit einer Vorrichtung nach einem der Ansprüche 1 - 6 vorgesehen sein.

Gemäß der vorliegenden Erfindung kann ein Verfahren zum Messen und Überwachen von Werkzeugen einer Werkzeugmaschine, mit einer in einem Spindelgehäuse angeordneten Spindelwelle für das Werkzeug und mit einem Mess- und Überwachungssystem vorgesehen sein. Mit dem Mess- und Überwachungssystem wird mindestens eine von dem Kontaktzustand zwischen Werkzeug und Werkstück abhängige elektrische Messgröße gemessen, wobei Werkstücke mit guter elektrischer Leitfähigkeit, wie z. B. Metalle, spanabhebend bearbeitet werden, wobei das Spindelgehäuse gegenüber der Spindelwelle isoliert wird. Ein Drehübertrager kontaktiert zum Messen der zwischen dem Werkzeug und dem Werkstück erfassbaren Messgröße die sich drehende Spindelwelle, wobei der Drehübertrager elektrisch isoliert mit dem Spindelgehäuse verbunden wird und zwischen seiner Welle und seinem Gehäuse über mindestens ein elektrisch leitfähiges Lager verfügt.

In dem Mess- und Überwachungssystem kann zumindest ein erster Ableitwiderstand zur Ableitung von elektrostatischer Aufladung zugeschaltet werden, wenn das Mess- und Überwachungssystem wie oben beschrieben nicht misst.

Wenn das Mess- und Überwachungssystem wie oben beschrieben misst, kann ein zweiter Ableitwiderstand anstelle des ersten Ableitwiderstand es zugeschaltet werden, der größer ist als der erste Ableitwiderstand ist, so dass auch während der Messung neu entstehende elektrostatische Aufladungen abgeleitet werden können.

Wenn das Werkzeug mit dem Werkstück nicht in Kontakt ist, kann kurzzeitig der erste Ableitwiderstand und, wenn vorhanden, gleichzeitig auch der zweite Ableitwiderstand weggeschaltet werden, so dass das Mess- und Überwachungssystem mittels der elektrischen Messgröße die Messgröße zwischen der Spindelwelle und dem Spindelgehäuse messen kann, um festzustellen, ob Kühlschmiermittel zwischen Spindelwelle und Spindelgehäuse gelangt ist.

Es kann eine nicht beanspruchte Vorrichtung zum Messen und Überwachen von Werkzeugen einer Werkzeugmaschine vorgesehen sein, die dadurch gekennzeichnet ist, dass zur Ermittlung der Lage des Werkstücks relativ zu der Werkzeugmaschine das Werkstück mittels des Werkzeugs berührt oder angebohrt wird (tool touch) und das Mess- und Überwachungssystem zu dem Zeitpunkt, an dem das Werkzeug das Werkstück berührt, dies mittels der elektrischen Messgröße erfasst und die dazugehörige Position des Werkstücks speichert oder in der Maschinensteuerung speichern lässt. Der für beide Fälle erforderliche Datenaustausch mit der Maschinensteuerung erfolgt vorzugsweise über einen Feldbus.

Auf diese Weise kann die Lage des Werkstücks relativ zu der Werkzeugmaschine einfach und schnell ermittelt werden. Es bedarf keiner zusätzlichen mechanischen oder optischen Tasteinrichtung, um die Lage des Werkstücks zu ermitteln.

Die Tasteinrichtung und die dafür notwendige drahtlose Datenübertragungseinrichtung im Arbeitsraum der Werkzeugmaschine sowie die mit einer solchen Einrichtung verbundenen Werkzeugwechselzeiten können mit der Erfindung überflüssig werden.

Zum Anbohren des Werkstücks mittels des Werkzeugs kann die Werkzeugspitze in eine definierte Endposition verfahrbar sein.

Zur Ermittlung der Lage des Werkstücks, kann das Werkstück mittels des Werkzeugs durch Berühren oder Anbohren des Werkstückes an einer oder an mehreren Stellen so erfolgen, wie dies gemäß dem Stand der Technik mit den heute in Spindelnasen verwendeten mechanischen Tastern erfolgt, die anstatt eines Werkzeuges dort eingesetzt werden.

Ferner kann ein nicht beanspruchtes Verfahren zum Messen und Überwachen von Werkstücken einer Werkzeugmaschine vorgesehen sein, mit einer in einem Spindelgehäuse angeordneten Spindelwelle für das Werkzeug und mit einem Mess- und Überwachungssystem, mit dem mindestens eine von dem Kontaktzustand zwischen dem Werkzeug und dem Werkstück abhängige elektrische Messgröße gemessen wird, wobei Werkstücke mit guter elektrischer Leitfähigkeit spanabhebend bearbeitet werden, wobei die das Spindelgehäuse gegenüber der Spindelwelle isoliert wird, dadurch gekennzeichnet, dass zur Ermittlung der Lage des Werkstücks relativ zu der Werkzeugmaschine das Werkstück mittels des Werkzeugs berührt bzw. angebohrt wird (tool touch) und der Zeitpunkt, an dem das Werkzeug das Werkstück erstmalig berührt, mittels der elektrischen Messgröße erfasst wird und die dazugehörige Position des Werkzeugs gespeichert wird.

Anhand der Zeichnungen werden Ausführungsbeispiele der vorliegenden Erfindung näher erläutert.
- Fig. 1: zeigt eine Vorrichtung zum Messen und Überwachen von Werkzeugen einer Werkzeugmaschine und die Werkzeugmaschine,
- Fig. 2: zeigt das Mess- und Überwachungssystem in einem ersten Zustand,
- Fig. 3: zeigt das Mess- und Überwachungssystem in einem zweiten Zustand,
- Fig. 4: zeigt das Mess- und Überwachungssystem in einem dritten Zustand,
- Fig. 5: zeigt eine von einem Werkzeug angebohrtes Werkstück und der dazugehörige Verlauf der gemessenen elektrischen Messgröße.

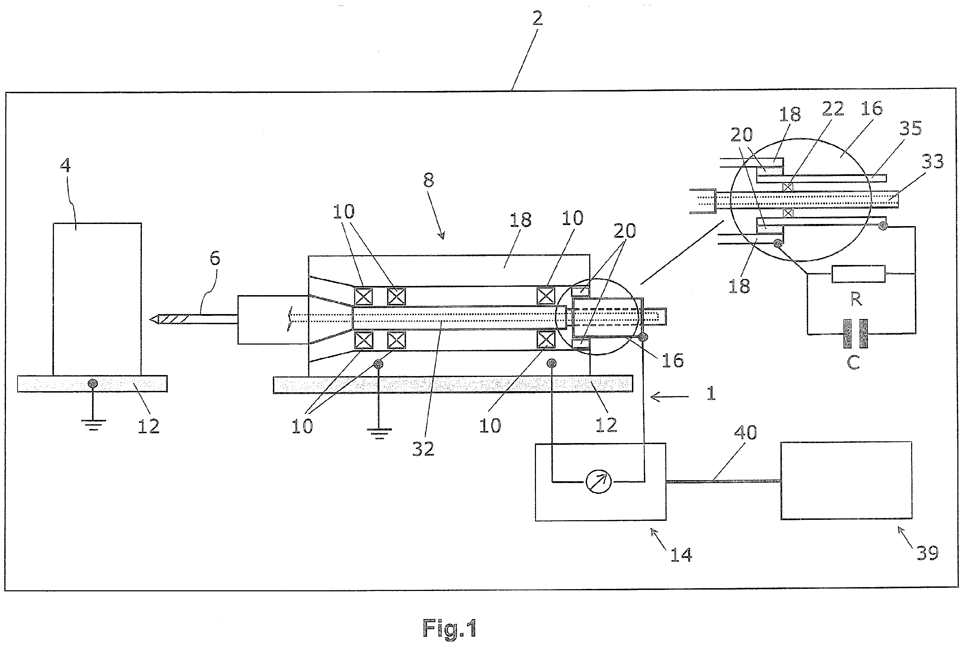

Fig. 1 zeigt eine Werkzeugmaschine 2 und eine Vorrichtung 1 zum Messen und Überwachen. Die Werkzeugmaschine 2 weist eine Spindel 8 auf. Die Spindel 8 weist ein Spindelgehäuse 18 und eine in dem Spindelgehäuse 18 angeordnete Spindelwelle 32 für das Werkzeug 6 auf. Mittels des Werkzeugs 6 kann ein Werkstück 4 mit guter elektrischer Leitfähigkeit spanabhebend bearbeitet werden. Die Spindelwelle 32 ist gegenüber dem Spindelgehäuse 18 elektrisch isoliert. Im dargestellten Ausführungsbeispiel ist die Spindelwelle 32 gegenüber dem Spindelgehäuse 18 mittels keramischer Lager 10 elektrisch isoliert.

Mittels eines Mess- und Überwachungssystems 14 kann mindestens eine von dem Kontaktzustand zwischen dem Werkzeug 6 und dem Werkstück 4 abhängige elektrische Messgröße gemessen werden. Eine solche elektrische Messgröße kann der elektrische Widerstand, die elektrische Leitfähigkeit, die elektrische Induktivität, die elektrische Kapazität oder die elektrische Impedanz sein. Auf diese Weise kann der Kontaktzustand zwischen dem Werkzeug 6 und dem Werkstück 4 bestimmt werden. Das Mess- und Überwachungssystem 14 ermöglicht es, die elektrische Messgröße zwischen Werkzeug und Werkstück zu Beginn, während oder zum Ende eines Bearbeitungszyklus bzw. Bearbeitungsabschnitts bzw. in einem Prüfzyklus zu messen und mit Schwellenwerten zu vergleichen, um bei Abweichung vom normalen Signalverlauf außerhalb der festgelegten Schwellenwertgrenzen bzw. bei Verletzung der Schwellenwertgrenzen durch den Signalverlauf auf ein abgebrochenes oder fehlendes Werkzeug bzw. einfach nur auf die Position oder den Zeitpunkt der Kontaktierung zwischen Werkzeug und Werkstück zu schließen. Über eine elektrische Maschinenschnittstelle 40, vorzugsweise ein Feldbus, kann die Maschinensteuerung 39 der Werkzeugmaschine 2 dazu veranlasst werden, den Bearbeitungsvorgang oder den Prüfzyklus zu unterbrechen bzw. zu stoppen.

Wie aus Fig. 1 zu entnehmen ist, ist die Welle 33 des Drehübertragers 16 zum Messen der zwischen dem Werkzeug 6 und dem Werkstück 4 erfassbaren Messgröße mit der sich drehenden Spindelwelle 32 mechanisch und elektrisch verbunden, wobei das Gehäuse 35 des Drehübertragers 16 elektrisch isoliert mit dem Spindelgehäuse 18 verbunden ist. Im dargestellten Ausführungsbeispiel ist eine elektrische Isolierung 20 zwischen dem Drehübertragergehäuse 35 und dem Spindelgehäuse 18 vorgesehen, die vorzugsweise aus keramischem Material besteht. Sowohl die Spindelwelle 32 als auch die Welle 33 des Drehübertragers 16 sind vorzugsweise zur Einleitung von Kühlschmiermittel hohl.

Die Welle 33 des Drehübertragers 16 ist mit dessen Gehäuse 35 zumindest über ein elektrisch leitendes Lager 22, das vorzugsweise ein Stahllager ist, elektrisch kontaktiert bzw. verbunden.

Somit wird ein elektrischer Signalfluss vom Mess- und Überwachungssystems 14 ermöglicht, der über die Komponenten Drehübertragergehäuse 35, elektrisch leitendes Lager 22, Welle 33 des Drehübertragers, Spindelwelle 32, Werkzeug 6, Werkstück 4 und die geerdeten Schlitten bzw. das geerdete Bett 12 an das Spindelgehäuse 18 verläuft, an die auch das Mess- und Überwachungssystems 14 angeschlossen ist. Der Signalfluss ändert sich natürlich drastisch zwischen den beiden Zuständen, in denen das Werkzeug 6 in elektrischem Kontakt mit dem Werkstück 4 steht bzw. nicht steht.

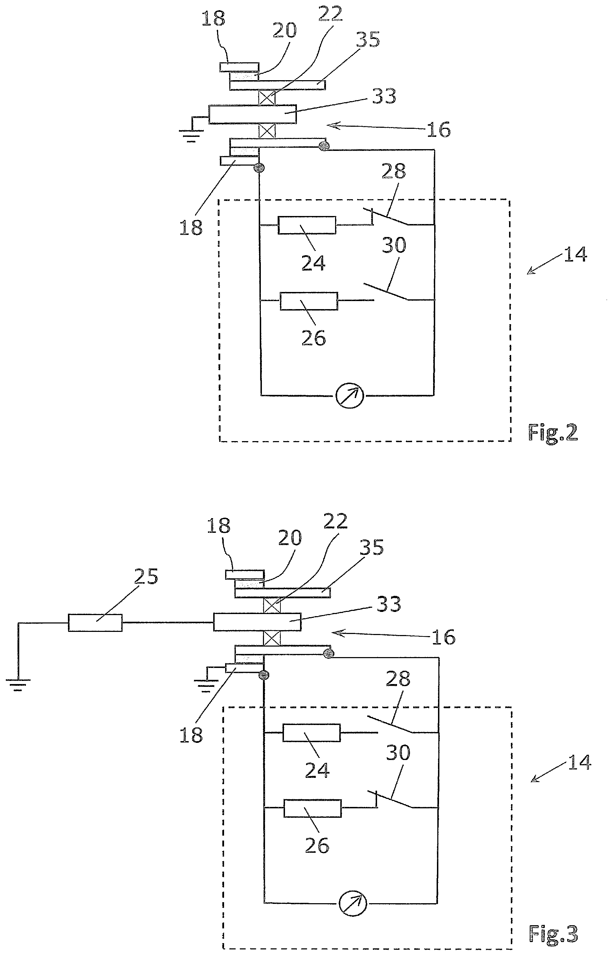

Die erfindungsgemäße Ausführungsform des Mess- und Überwachungssystems 14 ist in den Figuren 2 bis 4 näher dargestellt. In Fig. 2 ist zu erkennen, dass das Mess- und Überwachungssystem vorzugsweise zumindest einen ersten Ableitwiderstand 24 aufweist, der mittels eines steuerbaren Schalters 28 zuschaltbar ist. Der erste Ableitwiderstand 24 wird in einem Zustand zugeschaltet, in dem das Mess- und Überwachungssystem 14 bestimmungsgemäß keine Messvorgänge ausführt, so dass in diesem Fall elektrostatische Aufladungen von der Spindelwelle 32 über das Mess- und Überwachungssystems 14 gegen Erde bzw. Masse über das elektrisch leitende Lager 22 und den Ableitwiderstand 24 ableitbar sind.

Die Höhe des ersten Ableitwiderstandes 24 ist derart zu wählen, dass er unter Berücksichtigung des mit ihm in Reihe geschalteten elektrischen Widerstandes 22 des elektrisch leitenden Lagers ausreichend klein ist, um die Menge einer maximal möglichen elektrischen Ladung auf der Spindelwelle 32 schnell und ausreichend an die Erde abzuleiten. Er sollte den elektrischen Widerstand 22 des Stahllagers (ca. 10 bis 80 Ohm bei Fettdauerschmierung) durch die Reihenschaltung mit ihm nicht nennenswert erhöhen, womit der erste Ableitwiderstand 24 deutlich kleiner als der elektrische Widerstand 22 und somit beispielsweise mit kleiner als 10 Ohm zu dimensionieren ist.

Der erste Ableitwiderstand 24 wird immer dann zugeschaltet, wenn kein Kontakt zwischen Werkzeug und Werkstück erwartet werden kann, um statische Aufladungen der Spindel schnell, sicher und ausreichend abzuführen. Damit wird die Gefahr eines elektrischen Schlages beim Arbeiten von Maschinenbedienern im Arbeitsraum der Maschine und dem Berühren der Spindelwelle 32 oder dem Werkzeug 6 ausgeschlossen.

Der erste Ableitwiderstand 24 ist in einem Zustand, in dem das Mess- und Überwachungssystem 14 misst, also dann, wenn ein Kontakt zwischen Werkzeug und Werkstück gegeben oder zu erwarten ist, nicht zugeschaltet, um den Messvorgang zu ermöglichen.

Wie Fig. 2 zu entnehmen ist, weist das Mess- und Überwachungssystem 14 zumindest einen zweiten Ableitwiderstand 26 auf. In Fig. 3 ist ein Zustand dargestellt, bei dem nicht der erste Ableitwiderstand 24 sondern der zweite Ableitwiderstand 26 mittels eines steuerbaren Schalters 30 zugeschaltet ist. Dieser Ableitwiderstandes 26 dient dazu, in Zeiten, in denen ein Kontakt zwischen dem Werkzeug und dem Werkstück zu erwarten ist, das Werkzeug 6 also auf das Werkstück 4 zufährt bis der Werkstück-/Werkzeugkontakt entsteht, die während dieses Zufahrprozesses maximal zufließbaren elektrischen Aufladungen der Spindelwelle 32 unmittelbar abzuführen.

Da die maximal zufließbaren Ladungen in dieser kurzen Zeit deutlich kleiner sind als die über längere Zeit maximal auf der Spindelwelle 32 ladbaren elektrostatischen Aufladungen, die mit dem sehr kleinen Ableitwiderstand 24 sicher abgeleitet werden, kann der Ableitwiderstand 26 deutlich größer als der Ableitwiderstand 24 bemessen sein. Er muss auch deutlich größer als die Summe der Widerstände der Reihenschaltung des Messkreises bestehend aus den Widerständen der Bauteile bzw. Komponenten 35, 22, 32, 33, 6, 4 und 12 sein, welches ersatzweise in der Fig. 3 mit dem Messkreiswiderstand 25 kenntlich gemacht ist. Da der Ableitwiderstand 26 mit dem Messkreiswiderstand 25 parallel geschaltet ist, ist dieser deutlich größer zu bemessen als der Messkreiswiderstand 25 für den Fall, bei dem das Werkzeug mit dem Werkstück in Kontakt ist. Der zweite Ableitwiderstand 26 ist auch unter dem Zustand zu wählen, dass, falls der Kontakt zwischen Werkstück 4 und Werkzeug 6 während der Messung wegbricht, eine deutliche Veränderung der gemessenen elektrischen Messgröße zu erkennen ist.

Der Messkreiswiderstand 25 beträgt für den Fall des Kontaktes zwischen Werkzeug und Werkstück weniger als 150 Ohm. Somit sollte der Ableitwiderstand 26 mit größer als 1 kOhm, besser mit größer als 1,5 Kiloohm bemessen werden.

Der zweite Ableitwiderstand 26 wird in einem Betriebszustand zugeschaltet, in dem das Mess- und Überwachungssystem 14 misst. Also der Kontakt zwischen Werkzeug und Werkstück besteht oder erwartet werden kann.

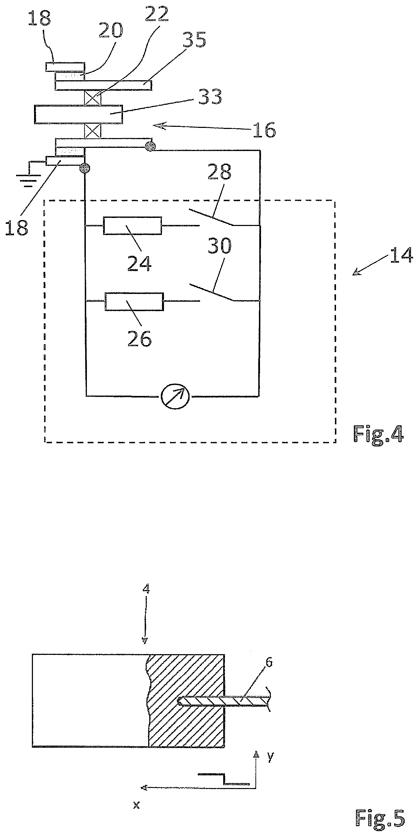

In Fig. 4 ist ein dritter Zustand dargestellt, bei dem beide parallel zum Messwiderstand 25 liegenden Ableitwiderstände 24 und 26 kurzzeitig und zusammen über die beiden steuerbaren Schalter 28 und 30 weggeschaltet sind. In diesem Zustand prüft das Mess- und Überwachungssystem 14 die Spindel 8 auf das ungewollte Vorhandensein von Leckagen in Form von Kühlschmiermittel zwischen Spindelwelle 32 und Spindelgehäuse 18, wobei das Werkzeug 6 und das Werkstück 4 in dieser kurzen Zeit nicht miteinander in Kontakt sein dürfen. Eine solche Messung kann beispielsweise bei kurzen Bearbeitungsunterbrechungen einmal am Tag oder einmal in der Woche vorgenommen werden und dauert jeweils weniger als eine Sekunde. Hierdurch lassen sich anbahnende Spindelschäden aufgrund von Leckage rechtzeitig erkennen und damit tatsächliche Spindelschäden mindern oder verhindern.

Eine Vorrichtung zum Messen und Überwachen von Werkzeugen gemäß Fig. 1 kann zusätzlich oder alternativ zur Ermittlung der Lage des Werkstücks 4 relativ zu der Werkzeugmaschine 2 verwendet werden. Dafür wird das Werkstück 4 mittels des Werkzeugs 6 langsam berührt bzw. angebohrt (tool touch) und das Mess- und Überwachungssystem 14 kann den Zeitpunkt, bei dem das Werkzeug 6 das Werkstück 4 berührt mittels der elektrischen Messgröße erfassen und sich die dazugehörige Position des Werkzeugs 6 über einen schnellen Datenaustausch mit der Maschinensteuerung bzw. NC-Steuerung 39 der Werkzeugmaschine 2 holen und selbst speichern. Oder das Mess- und Überwachungssystem 14 sendet zum Zeitpunkt der Berührung einen schnellen Kontaktbefehl an die Maschinensteuerung bzw. NC-Steuerung 39, der dazu führt, dass die zu diesem Zeitpunkt von der Maschinensteuerung bzw. NC-Steuerung gemessene Position in der Maschinensteuerung bzw. NC Steuerung gespeichert wird. Für den Datenaustausch zwischen dem Mess- und Überwachungssystem 14 und der Maschinensteuerung 39 wird vorzugsweise ein Feldbus 40 verwendet.

In Fig. 5 ist ein Werkstück 4 dargestellt, in das ein Werkzeug 6 hineingebohrt ist. Unter dem Werkstück ist der Verlauf einer Messgröße dargestellt. Die Messgröße ist im Koordinatensystem auf der Y-Achse aufgetragen und auf der X-Achse ist die dazugehörige Position der Spitze des Werkzeugs 6 dargestellt. Zu dem Zeitpunkt, zu dem die Spitze des Werkzeugs 6 das Werkstück 4 berührt, verändert sich die Messgröße Y sprungartig auf ein anderes Niveau. Die dazugehörige Position des Werkzeugs 6 kann gespeichert werden.

Zur Ermittlung der Lage des Werkstücks 4, kann das Werkstück 4 mittels des Werkzeugs 6 durch berühren oder anbohren des Werkstückes 4 an einer oder an mehreren Stellen so erfolgen, wie dies gemäß dem Stand der Technik mit den heute in Spindelnasen verwendeten mechanischen Tastern erfolgt, die anstatt eines Werkzeuges 6 dort eingesetzt werden.. Das Werkzeug 6 wird in eine vordefinierte Endposition verfahren. Die Punkte, an denen das Werkstück angebohrt wird, werden derart gewählt, dass es für die weitere Funktion des Werkstücks irrelevant ist, dass in den Werkstück an diesen Stellen kleine Löcher bzw. Körnermarken verbleiben.

## Patentansprüche

1. Vorrichtung (1) zum Messen und Überwachen von Werkzeugen einer Werkzeugmaschine (2), wobei die Werkzeugmaschine (2) eine in einem Spindelgehäuse (18) angeordnete Spindelwelle (32) für das Werkzeug (6) aufweist, wobei mittels des Werkzeugs (6) ein Werkstück (4) mit elektrischer Leitfähigkeit spanabhebend bearbeitbar ist, wobei die Spindelwelle (32) gegenüber dem Spindelgehäuse (18) elektrisch isoliert ist, mit
- einem Mess- und Überwachungssystem (14), wobei das Mess- und Überwachungssystem (14) mindestens eine von dem Kontaktzustand zwischen dem Werkzeug (6) und dem Werkstück (4) abhängige elektrische Messgröße misst, wobei
- ein Drehübertrager (16) zum Messen der zwischen dem Werkzeug (6) und dem Werkstück (4) erfassbaren Messgröße die sich drehende Spindelwelle (32) kontaktiert und mit dieser elektrisch verbunden ist,
wobei der Drehübertrager (16) elektrisch isoliert mit dem Spindelgehäuse (18) verbunden ist, **dadurch gekennzeichnet, dass** das Mess- und Überwachungssystem (14) zumindest einen ersten Ableitwiderstand (24) aufweist, der in einem Zustand, in dem das Mess- und Überwachungssystem (14) nicht misst, zuschaltbar ist, so dass elektrostatische Aufladungen von der Spindelwelle (32) ableitbar sind.

2. Vorrichtung (1) nach Anspruch 1, **dadurch gekennzeichnet, dass** die Höhe des ersten Ableitwiderstandes (24)derart gewählt ist, dass er ausreichend klein ist, um die Menge einer maximal möglichen elektrischen Ladungen auf der Spindelwelle (32) schnell und ausreichend an die Erde abzuleiten.

3. Vorrichtung (1) nach einem der Ansprüche 1 bis 2, **dadurch gekennzeichnet, dass** der erste Ableitwiderstand (24)in einem Zustand, in dem das Mess- und Überwachungssystem (14) misst, nicht zugeschaltet ist, wobei in diesem Zustand ein Kontakt zwischen Werkzeug (6) und Werkstück (4) gegeben oder zu erwarten ist.

4. Vorrichtung (1) nach einem der Ansprüche 1 bis 3, **dadurch gekennzeichnet, dass** das Mess- und Überwachungssystem (14) zumindest einen zweiten Ableitwiderstand (26) aufweist, der in einem Betriebszustand, in dem das Mess- und Überwachungssystem (14) misst, zuschaltbar ist.

5. Vorrichtung (1) nach Anspruch 4, **dadurch gekennzeichnet, dass** der erste und der zweite Ableitwiderstand (24, 26) in einem Zustand, in dem das Werkzeug (6) und das Werkstück (4) nicht miteinander in Kontakt sind oder kein Kontakt zwischen Werkzeug (6) und Werkstück (4) zu erwarten ist, zumindest zeitweise weggeschaltet sind, so dass mittels der mit dem Mess- und Überwachungssystem (14) gemessenen elektrischen Messgröße das Vorhandensein von Kühlschmiermittel zwischen Spindelwelle (32) und Spindelgehäuse (18) unbeeinflusst von den Ableitwiderständen (24, 26) detektierbar ist.

6. Vorrichtung (1) nach einem der Ansprüche 1 bis 5, **dadurch gekennzeichnet, dass** die von dem Kontaktzustand zwischen dem Werkzeug (6) und dem Werkstück (4) abhängige und erfassbare elektrische Messgröße der elektrische Widerstand, die elektrische Leitfähigkeit, die elektrische Induktivität, die elektrische Kapazität oder die elektrische Impedanz ist.

7. Werkzeugmaschine (2) mit einem Mess- und Überwachungssystem (14) mit einer Vorrichtung (1) nach einem der Ansprüche 1 bis 6.

8. Verfahren zum Messen und Überwachen von Werkzeugen (6) einer Werkzeugmaschine (2),
- mit einer in einem Spindelgehäuse (18) angeordneten Spindelwelle (32) für das Werkzeug (6) und
- mit einem Mess- und Überwachungssystem (14), mit dem mindestens eine von dem Kontaktzustand zwischen dem Werkzeug (6) und dem Werkstück (4) abhängige elektrische Messgröße gemessen wird,
- wobei Werkstücke (4) mit elektrischer Leitfähigkeit spanabhebend bearbeitet werden,
- wobei das Spindelgehäuse (18) gegenüber der Spindelwelle (32) isoliert wird, wobei
- ein Drehübertrager (16) zum Messen der zwischen dem Werkzeug (6) und dem Werkstück (4) erfassbaren Messgröße die sich drehende Spindelwelle (32) kontaktiert und mit dieser elektrisch verbunden ist,
wobei der Drehübertrager (16) elektrisch isoliert mit dem Spindelgehäuse (18) verbunden wird, **dadurch gekennzeichnet, dass** in dem Mess- und Überwachungssystem (14) zumindest ein erster Ableitwiderstand (24) zur Ableitung von elektrostatischer Aufladung zugeschaltet werden kann, wenn das Mess- und Überwachungssystem (14) nicht misst.

9. Verfahren nach Anspruch 8, **dadurch gekennzeichnet, dass**, wenn das Mess- und Überwachungssystem (14) misst, ein zweiter Ableitwiderstand (26) anstelle des ersten Ableitwiderstandes (24) zugeschaltet werden kann, der größer ist als der erste Ableitwiderstand (24), so dass während der Messung elektrostatische Aufladungen abgeleitet werden können.

10. Verfahren nach einem der Ansprüche 8 bis 9, **dadurch gekennzeichnet, dass**, wenn das Werkzeug (6) mit dem Werkstück (4) nicht in Kontakt ist, kurzzeitig der erste Ableitwiderstand (24), und wenn vorhanden, gleichzeitig auch der zweite Ableitwiderstand (26) abgeschaltet werden, so dass das Mess- und Überwachungssystem (14) mittels der elektrischen Messgröße die Messgröße zwischen der Spindelwelle (32) und dem Spindelgehäuse (18) messen kann, um festzustellen, ob Kühlschmiermittel zwischen Spindelwelle (32) und Spindelgehäuse (18) gelangt ist.

## Claims

1. Device (1) for measuring and monitoring tools of a machine tool (2), wherein the machine tool (2) has a spindle shaft (32), arranged in a spindle housing (18), for the tool (6), wherein an electrically conductive workpiece (4) is able to be machined by way of the tool (6), wherein the spindle shaft (32) is electrically insulated from the spindle housing (18), having
- a measurement and monitoring system (14), wherein the measurement and monitoring system (14) measures at least one electrical measured variable dependent on the state of contact between the tool (6) and the workpiece (4), wherein
- a rotary transmitter (16) makes contact with and is electrically connected to the rotating spindle shaft (32) in order to measure the measured variable able to be recorded between the tool (6) and the workpiece (4),
wherein the rotary transmitter (16) is connected in an electrically insulated manner to the spindle housing (18), **characterized in that** the measurement and monitoring system (14) has at least one first bleeder resistor (24) that is able to be activated in a state in which the measurement and monitoring system (14) is not measuring such that electrostatic charges are able to be diverted away from the spindle shaft (32).

2. Device (1) according to Claim 1, **characterized in that** the resistance of the first bleeder resistor (24) is selected such that it is small enough to quickly and sufficiently divert the amount of maximum possible electric charges on the spindle shaft (32) to ground.

3. Device (1) according to either of Claims 1 and 2, **characterized in that** the first bleeder resistor (24) is not activated in a state in which the measurement and monitoring system (14) is measuring, wherein contact between the tool (6) and the workpiece (4) is present or should be expected in this state.

4. Device (1) according to one of Claims 1 to 3, **characterized in that** the measurement and monitoring system (14) has at least one second bleeder resistor (26) that is able to be activated in an operating state in which the measurement and monitoring system (14) is measuring.

5. Device (1) according to Claim 4, **characterized in that** the first and the second bleeder resistor (24, 26) are at least temporarily deactivated in a state in which the tool (6) and the workpiece (4) are not in contact with one another or no contact between the tool (6) and the workpiece (4) should be expected, such that the presence of coolant lubricant between the spindle shaft (32) and the spindle housing (18) is able to be detected in a manner not influenced by the bleeder resistors (24, 26) by way of the electrical measured variable measured by the measurement and monitoring system (14).

6. Device (1) according to one of Claims 1 to 5, **characterized in that** the electrical measured variable able to be acquired from and dependent on the state of contact between the tool (6) and the workpiece (4) is the electrical resistance, the electrical conductivity, the electrical inductance, the electrical capacitance or the electrical impedance.

7. Machine tool (2) having a measurement and monitoring system (14) having a device (1) according to one of Claims 1 to 6.

8. Method for measuring and monitoring tools (6) of a machine tool (2),
- having a spindle shaft (32), arranged in a spindle housing (18), for the tool (6) and
- having a measurement and monitoring system (14) by way of which at least one electrical measured variable dependent on the state of contact between the tool (6) and the workpiece (4) is measured,
- wherein electrically conductive workpieces (4) are machined,
- wherein the spindle housing (18) is insulated from the spindle shaft (32), wherein
- a rotary transmitter (16) makes contact with and is electrically connected to the rotating spindle shaft (32) in order to measure the measured variable able to be recorded between the tool (6) and the workpiece (4),
wherein the rotary transmitter (16) is connected in an electrically insulated manner to the spindle housing (18), **characterized in that** at least one first bleeder resistor (24) for diverting electrostatic charge is able to be activated in the measurement and monitoring system (14) when the measurement and monitoring system (14) is not measuring.

9. Method according to Claim 8, **characterized in that**, when the measurement and monitoring system (14) is measuring, a second bleeder resistor (26) with a greater resistance than the first bleeder resistor (24) is able to be activated instead of the first bleeder resistor (24), such that electrostatic charges are able to be diverted away during the measurement.

10. Method according to either of Claims 8 and 9, **characterized in that**, when the tool (6) is not in contact with the workpiece (4), the first bleeder resistor (24) and, if present, at the same time also the second bleeder resistor (26) are briefly switched off, such that the measurement and monitoring system (14) is able to measure the measured variable between the spindle shaft (32) and the spindle housing (18) by way of the electrical measured variable in order to establish whether coolant lubricant has arrived between the spindle shaft (32) and the spindle housing (18).

## Revendications

1. Dispositif (1) dévolu à la mesure et à la surveillance d'outils d'une machine-outil (2), ladite machine-outil (2) étant dotée d'un arbre (32) de broche, logé dans un carter (18) de broche et destiné à l'outil (6), sachant qu'une pièce (4), douée de conductivité électrique, peut être usinée par enlèvement de copeaux au moyen dudit outil (6), ledit arbre (32) de la broche étant isolé électriquement par rapport au carter (18) de ladite broche, comprenant
- un système (14) de mesure et de surveillance, lequel système (14) de mesure et de surveillance mesure au moins une grandeur électrique à mesurer, tributaire de l'état de contact instauré entre l'outil (6) et la pièce (4), sachant
- qu'un transformateur rotatif (16) est en contact avec l'arbre (32) de la broche accomplissant une rotation, auquel il est connecté électriquement, afin d'effectuer une mesure de la grandeur à mesurer pouvant être détectée entre l'outil (6) et la pièce (4), ledit transformateur rotatif (16) étant relié au carter (18) de la broche avec isolation électrique, **caractérisé par le fait que** le système (14) de mesure et de surveillance est muni d'au moins une première résistance de fuite (24) pouvant être mise en circuit dans un état dans lequel ledit système (14) de mesure et de surveillance n'effectue aucune mesure, de telle sorte que des charges électrostatiques puissent être dissipées de l'arbre (32) de la broche.

2. Dispositif (1) selon la revendication 1, **caractérisé par le fait que** la hauteur de la première résistance de fuite (24) est choisie de telle sorte qu'elle soit suffisamment petite pour dissiper rapidement et suffisamment, vers la terre, l'ampleur d'une charge électrique maximale possible sur l'arbre (32) de la broche.

3. Dispositif (1) selon l'une des revendications 1 à 2, **caractérisé par le fait que** la première résistance de fuite (24) n'est pas mise en circuit dans un état dans lequel le système (14) de mesure et de surveillance effectue une mesure, sachant qu'un contact, entre l'outil (6) et la pièce (4), est instauré ou escompté dans cet état.

4. Dispositif (1) selon l'une des revendications 1 à 3, **caractérisé par le fait que** le système (14) de mesure et de surveillance est pourvu d'au moins une seconde résistance de fuite (26) pouvant être mise en circuit dans un état fonctionnel dans lequel ledit système (14) de mesure et de surveillance effectue une mesure.

5. Dispositif (1) selon la revendication 4, **caractérisé par le fait que** la mise en circuit des première et seconde résistances de fuite (24, 26) est au moins temporairement interrompue dans un état dans lequel l'outil (6) et la pièce (4) ne sont pas en contact l'un avec l'autre, ou aucun contact n'est à escompter entre ledit outil (6) et ladite pièce (4), de sorte que la présence de lubrifiant réfrigérant, entre l'arbre (32) de la broche et le carter (18) de ladite broche, peut être détectée sans être influencée par lesdites résistances de fuite (24, 26), à l'appui de la grandeur électrique à mesurer, mesurée par le système (14) de mesure et de surveillance.

6. Dispositif (1) selon l'une des revendications 1 à 5, **caractérisé par le fait que** la grandeur électrique à mesurer pouvant être détectée, tributaire de l'état de contact instauré entre l'outil (6) et la pièce (4), est la résistance électrique, la conductivité électrique, l'inductance électrique, la capacité électrique ou l'impédance électrique.

7. Machine-outil (2) équipée d'un système (14) de mesure et de surveillance associé à un dispositif (1) conforme à l'une des revendications 1 à 6.

8. Procédé de mesure et de surveillance d'outils (6) d'une machine-outil (2) comprenant
- un arbre (32) de broche, logé dans un carter (18) de broche et destiné à l'outil (6), et
- un système (14) de mesure et de surveillance qui mesure au moins une grandeur électrique à mesurer, tributaire de l'état de contact instauré entre l'outil (6) et la pièce (4),
- sachant que des pièces (4), douées de conductivité électrique, sont usinées par enlèvement de copeaux,
- sachant que le carter (18) de la broche est isolé par rapport à l'arbre (32) de ladite broche, sachant
- qu'un transformateur rotatif (16) est en contact avec l'arbre (32) de la broche accomplissant une rotation, auquel il est connecté électriquement, afin d'effectuer une mesure de la grandeur à mesurer pouvant être détectée entre l'outil (6) et la pièce (4), ledit transformateur rotatif (16) étant relié au carter (18) de la broche avec isolation électrique, **caractérisé par le fait qu'**au moins une première résistance de fuite (24) peut être mise en circuit dans le système (14) de mesure et de surveillance, en vue de la dissipation d'une charge électrostatique, lorsque ledit système (14) de mesure et de surveillance n'effectue aucune mesure.

9. Procédé selon la revendication 8, **caractérisé par le fait qu'**une seconde résistance de fuite (26), supérieure à la première résistance de fuite (24), peut être mise en circuit à la place de ladite première résistance de fuite (24) lorsque le système (14) de mesure et de surveillance effectue une mesure, de telle sorte que des charges électrostatiques puissent être dissipées au cours de ladite mesure.

10. Procédé selon l'une des revendications 8 à 9, **caractérisé par le fait que**, lorsque l'outil (6) n'est pas en contact avec la pièce (4), la première résistance de fuite (24) est brièvement déconnectée, également avec déconnexion concomitante de la seconde résistance de fuite (26) lorsque celle-ci est présente, de telle sorte que le système (14) de mesure et de surveillance puisse mesurer, à l'appui de la grandeur électrique à mesurer, la grandeur à mesurer entre l'arbre (32) de la broche et le carter (18) de ladite broche, de manière à constater si du lubrifiant réfrigérant est parvenu entre ledit arbre (32) de la broche et ledit carter (18) de la broche.
